Europäisches Patentamt

(19) European Patent Office

Office européen des brevets

(11) Publication number: **0 162 980**

**A1**

(12) **EUROPEAN PATENT APPLICATION**

(21) Application number: **84306058.3**

(22) Date of filing: **05.09.84**

(51) Int. Cl.⁴: **B 25 J 15/00**

(30) Priority: **10.05.84 US 609018**

(43) Date of publication of application:
**04.12.85 Bulletin 85/49**

(84) Designated Contracting States:
**BE DE FR GB IT NL**

(71) Applicant: QUAD SYSTEMS CORPORATION

Horsham Pennsylvania(US)

(72) Inventor: Young, David H.
1237 Stump Road North Wales
Montgomery Pennsylvania(US)

(74) Representative: Newens, Leonard Eric et al,
F.J. CLEVELAND & CO. 40/43 Chancery Lane
London WC2A 1J Q(GB)

(54) **Improved detachable end effector for a robotic system.**

(57) An end effector for a robotic system includes a shaft capable of being axially translated without rotation, rotated without translation or simultaneously axially translated and rotated. The shaft includes a threaded portion. Mating with the threaded portion is a surrounding threaded member. Rotation of the threaded member with respect to the threaded portion of the shaft causes axial translation of the shaft. A yoke is provided for controlling rotation of the shaft while permitting axial translation. When the yoke is rotating, but the threaded member is stationary, the shaft axially translates while simultaneously rotating. When both the threaded member and the yoke are rotating at the same speed the shaft rotates without axial translation.

M-1211-1

## IMPROVED DETACHABLE END
## EFFECTOR FOR A ROBOTIC SYSTEM

### Related Applications

This application is a continuation-in-part of application Serial No. 460,560 filed January 24, 1983.

### Field of the Invention

The present invention relates in general to the field of robotics, and in particular, relates to a novel and improved end effector for use with a robotic system.

### Background of the Invention

A robot, in modern parlance, comprises a general purpose manipulator, the movements of which are controlled by a computer. In many cases, robots are designed to perform tasks in the past performed by humans. Thus, robots are required to perform gross movements, similar to those performed by the human arm, as well as precise movements similar to those performed by the human hand and fingers. In this regard, robotic systems typically employ a general purpose manipulator which includes two or more subsystems. The first of these subsystems may be termed a multi-axis manipulator. The second of these subsystems may be termed an end effector. It is an improved end effector to which the present invention is directed.

In a typical robotic system, the aforementioned multi-axis manipulator is utilized to provide gross movement control so as to generally position work with respect to the workpiece. An end effector is utilized to achieve precise movement control and to accurately position the work with respect to the workpiece. Depending on the nature of the activity for which the robotic system is being utilized, two or more end effectors may be employed such that the final end effector may achieve the necessary precision movement required.

While varying types of end effectors are known, the type of end effector to which the present invention is an improvement is required to provide linear movement, rotational movement and to provide simultaneous linear and rotational movement as well.

Prior art end effectors of this general type employ what might be termed a lead screw-slide/track arrangement. A lead screw-slide/track end effector is driven by two motors. The first motor turns a screw which drives a slide along a track to provide linear movement. The slide/track is mounted for rotational movement and the second motor rotates the slide/track as well as the first motor which is attached to it. By simultaneous and controlled operation of the first and second motors, simultaneous linear and rotational motion may be provided. Alternatively, lead screw-slide/track end effectors are known in which the second motor (which causes rotation) is mounted on the slide. The first motor drives the slide linearly as well as the second motor which is attached to the slide.

The lead screw-slide/track end effectors of the prior art suffer from serious disadvantages. First, lead screw-slide/ track end effectors are expensive. The precise motions required of an end effector in general require expensive, high precision parts. For example, lead screw-slide/track end effectors require expensive roller slide bearings. Secondly, such lead screw-slide/track end effectors tend to be bulky and thus not particularly well adapted for use in small, confined spaces. Thirdly, such end effectors, as mentioned above, typically employ two motors. One motor is typically mounted on a moving part driven by the other motor. Thus, one motor must provide sufficient torque to not only carry and transport the desired load, but must also have sufficient torque to move the other motor as well. Thus, the combined size and weight of the motors required to drive a lead screw-slide/track end effector may become excessive. Since the end effector must also be driven by a multi-axis manipulator so as to be grossly positioned with respect to a workpiece, the size and weight of the motors required to drive that multi-axis manipulator is also unduly large. Thus, since robotic systems are required to move from one location to another with great rapidity the inertia presented by lead screw-slide/track end effectors is a disadvantage.

In copending parent application Serial No. 460,560 filed January 24, 1983, an end effector is disclosed which eliminates the above-identified disadvantages of screw-slide/track end effectors. The end effector disclosed in the parent application to this application, because it has eliminated these disadvantages, is particularly suitable for electronic assembly purposes. In particular, this end effector is useful for the assembly of surface mounted devices in which miniature electronic components are positioned with respect to a substrate and thereafter bonded to it.

One problem associated with prior art robotic systems which are used for electronic assembly purposes is that it is necessary that each component to be bonded to a given substrate be precisely aligned and positioned before bonding occurs. Different techniques have been employed to insure that the components to be assembled are properly aligned or oriented before bonding.

In one such technique, the components to be bonded are precisely aligned before being presented to the robotic system for assembly. For example, the components are sometimes precisely arranged on a carrier and the robotic system simply retrieves them from the carrier and thereafter bonds them to a substrate without changing the alignment or orientation of the components. This technique is relatively expensive, not only because it requires the presence of a carrier, but also because it requires the precise location of the various components with respect to that carrier.

In a second technique components are presented to the robotic system in a misaligned orientation rather than being aligned on a carrier. The robot selects a given component for assembly and thereafter transports that component to an alignment station at which the component is oriented. Thereafter the component is transferred to the substrate for assembly without change in orientation. This technique is unduly slow because it requires chips to be directed to an additional work station, i.e., an alignment station rather than being directly applied to the substrate.

With a third technique, the disadvantages of the first two mentioned techniques are avoided. With the third technique components are presented to the robotic system with a misaligned orientation. The end effector selects a given component and picks up that component. With this technique, however, the end effector is provided with a centering or alignment device which precisely aligns the selected component while the component is held by the end effector. The precisely aligned component is then bonded to the substrate without further change in its orientation. This third technique also suffers from certain drawbacks.

End effectors which are provided with attached centering or alignment tools are capable of selecting, aligning and finally positioning electrical circuit components which do not vary greatly in size, shape or weight from one to another. In certain applications, however, a robotic system may be called upon to grip, to align and to position components having widely varying sizes and shapes and to thereafter locate those items precisely with respect to a workpiece or substrate. While a given end effector might be designed which is capable of accomplishing the gripping, aligning and location of some components with respect to the substrate, it is very difficult, if not impossible, to design a suitable end effector for accomplishing these tasks for a wide variety of differently sized and shaped components.

In one type of assembly robot now known and used for the assembly of electronic components, an end effector is provided which utilizes an attached alignment tool having fingers which not only grip, but which also align the component. Various methods are used to actuate the finger of such alignment devices, such as, for example, hydraulic (air or fluid) or electromagnetic (solenoids, motors, etc.) means. Due in part to the control lines for the fingers of such alignment devices, the end effectors which employ such alignment devices are typically not removable from the robotic arms to which they are attached. Accordingly, in prior art robotic systems utilized for electronic component assembly purposes, end effectors must be designed so as to accomplish the gripping, centering and location of components of a given size and shape. Because many electronic component assembly processes require the use of components having different size or shape, however, such known robotic electronic assembly systems are inadequate.

It would be desirable to provide an end effector for use in a robotic system which does not suffer from these disadvantages and it is an object of this invention to provide such an end effector. It is a further object of this invention to provide an end effector which is capable of gripping, centering and locating components of varying size and shape with respect to a substrate.

It is a still further object of the present invention to provide an end effector capable of the foregoing precise movements and which also has the benefit of low inertia.

It is still a further object of the present invention to provide an end effector for a robotic assembly system which is simply and easily removable from an attached robotic arm.

These and other objects are accomplished by means of a novel robotic system having an improved end effector. In the robotic system of the present invention a carriage is provided for grossly positioning work with respect to a workpiece and an end effector is provided for precisely positioning that work with respect to the workpiece. The end effector includes a stationary portion which is fixed to the carriage, a pick-up means movable along its axis with respect to the stationary portion, the pick-up means having a nozzle for holding work adjacent to it by means of a vacuum and an alignment means carried by the pick-up means for precisely aligning the work with respect to the nozzle. The alignment means is detachably coupled to the pick-up means and is easily removable from it.

In accordance with one important aspect of the present invention, the alignment means includes at least one pair of opposing centering fingers and a collapsible means which permits retraction of the pick-up means along its axis so that the pick-up means is movable with respect to the centering finger. The alignment means also includes means for causing the transverse movement of the centering fingers with respect to the nozzle when the nozzle is in the predetermined position with respect to the fingers.

In accordance with another important aspect of the present invention, an actuator means is provided which is situated between the alignment means and the stationary portion of the carriage for causing transverse movement of the centering fingers.

In accordance with the preferred embodiment of the present invention, the alignment means includes a first and second pair of opposing centering fingers and the actuator means includes a first and second actuator block movable independently of each other. Each pair of opposing centering fingers is thus activated independently by the actuator blocks such that the centering fingers can grip and locate components having varying shape.

In accordance with still another important aspect of the present invention, a robotic system is provided with a plurality of alignment means detachably mounted with respect to the pick-up means. The robotic system typically employs a first alignment means for picking up and aligning components in a first size range and thereafter positioning those components with respect to a substrate. A second alignment means is also provided which is also detachably mounted to the pick-up means, alternatively with the first alignment means, such that components in a second size range may be gripped, aligned and assembled. The present invention thus insures that electronic components of widely varying sizes and shapes may be selected, oriented and assembled with respect to a given substrate.

Brief Description of the Drawings

These and other objects of the present invention will be more fully understood by reference to the accompanying drawings in which:

Fig. 1 is a perspective view of the typical prior art lead screw-slide/track end effector;

Fig. 2 is a frontal view of the robotic system employing the novel end effector of the present invention;

Fig. 3 is a fragmentary top view of the robotic system shown in Fig. 2;

Fig. 4 is a partial fragmentary view of the end effector shown in the robotic system shown in Fig. 3, but without the improved alignment means of the present invention;

Figs. 5a-5d are sequential views showing the various modes of operation of the end effector of Fig. 4;

Fig. 6 is a partial fragmentary view of the end effector of Fig. 2 including the novel alignment and centering means of the present invention;

Fig. 7 is an end view of the end effector shown in Fig. 6 in the direction of lines 7-7;

Fig. 8 is a cross-sectional view of the end effector shown in Fig. 6 taken along section lines 8-8;

Fig. 9 is a sectional view of the end effector of Fig. 6 taken along section lines 9-9; and

Fig. 10 is an exploded perspective view of the end effector of Fig. 6 showing the relationship of the various components thereof.

## Detailed Description of the Preferred Embodiment

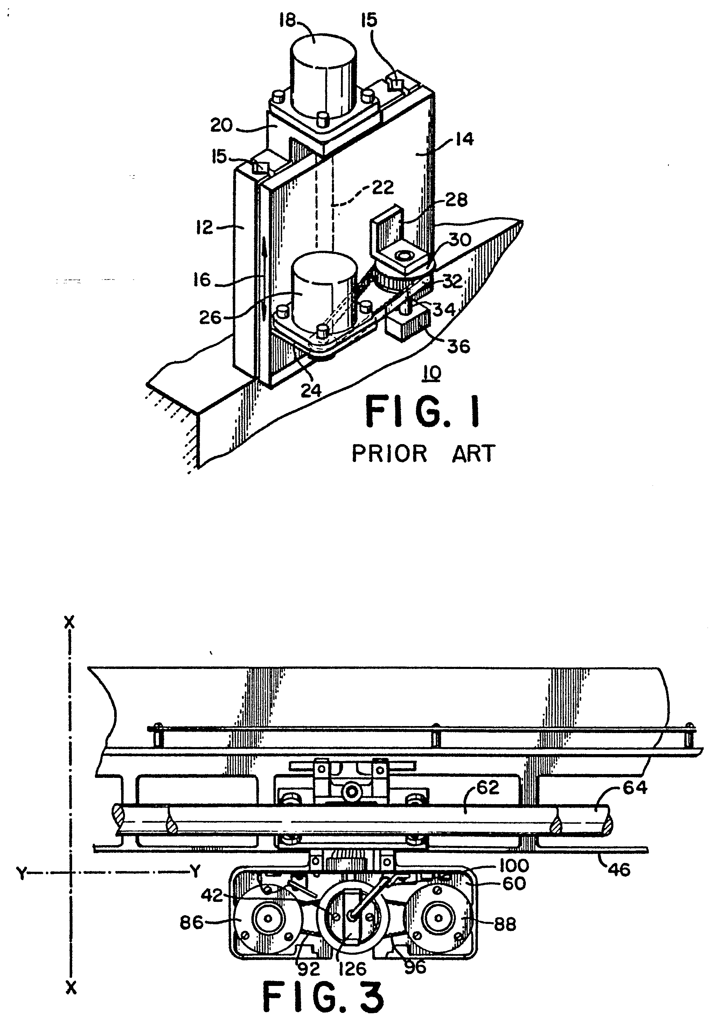

Referring now to Fig. 1, a lead screw-slide/track end effector typical of the prior art is shown at 10. The end effector 10 includes a stationary track shown at 12 with a linear slide 14 engaged therewith. The slide is capable of vertical movement in the direction of arrows 16. The vertical position of the slide 14 is controlled by means of a first rotary motor 18 which is connected to the stationary track 12 via bracket 20. A lead screw shown in phantom at 22 is driven by the motor 18. The lead screw 22 mates with a nut (not shown) which is carried by the slide 14. Fastened to the linear slide 14 is a bracket 24 upon which is situated a second motor 26. Also, coupled to the linear slide 14 is a bracket 28 which retains a pulley 30. The pulley 30 is driven by the motor 26 through a belt shown at 32. Coupled to the pulley 30 is a shaft 34, the axis of which is parallel to the direction of travel of the linear slide 14. At the extremity of the shaft 34 is a working member 36. Rotation of the second motor 26 operates to rotate the working member 36 via the belt 32 and the pulley 30.

As will be appreciated from reviewing Fig. 1, the construction of the stationary track 12 and the linear slide 14 must be sufficiently strong so as to carry the mass and weight of the motor 26, the shaft 34 and the working member 36. Likewise, the torque delivered by the first motor 18 must also be sufficient to drive the slide 14 and associated parts. Moreover, as can be appreciated from Fig. 1, the precise positioning of the linear slide 14 is dependent upon proper functioning of roller slide bearings shown generally at 15 which are situated between the stationary track 12 and the linear slide 14. It would be desirable to reduce the inertia and cost of manufacture of end effectors of the type generally shown in Fig. 1.

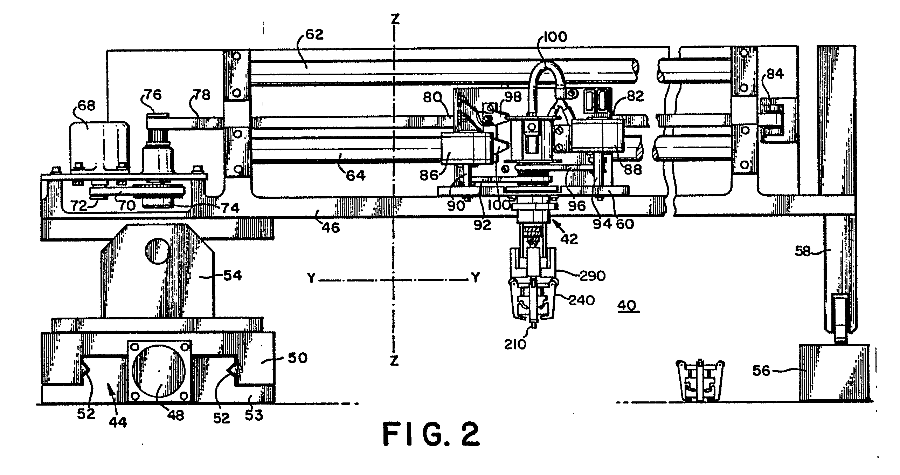

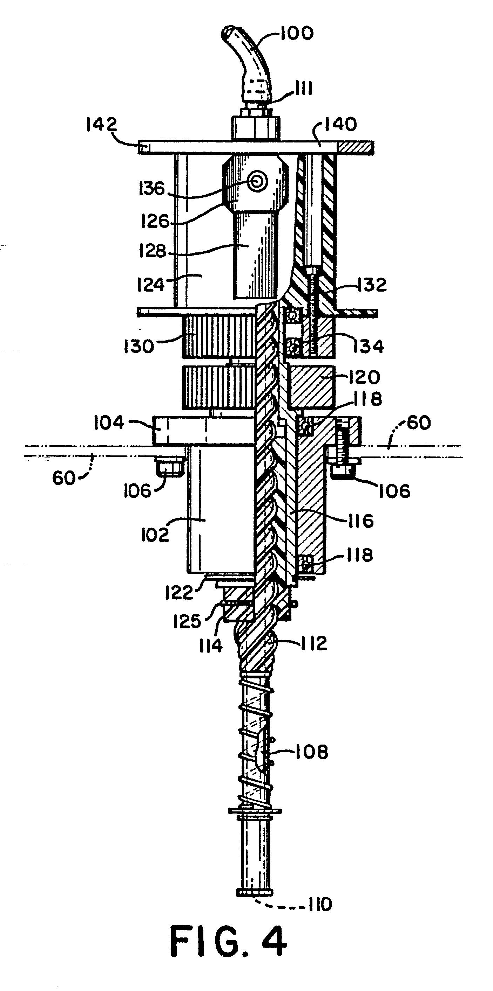

Referring now to Fig. 2 a robotic system 40 employing an end effector 42 which accomplishes these results is shown generally. The robotic system 40 includes a multi-axis manipulator which grossly positions the end effector 42. The multi-axis manipulator as shown in Fig. 2 includes a means shown generally at 44 for generally positioning a beam 46 at an appropriate gross position along the X (Fig. 3) axis with respect to the workpiece. The means 44 preferably includes a rotary stepper motor 48 for driving a lead screw (not shown). The lead screw is utilized for advancing or retracting a slide shown at 50 along tracks 52 formed in base member 53. The beam 46 is coupled to the slide 50 by means of a machine support 54. The beam 46 is further coupled to a second machine support 56 by means of a slide bearing 58 as shown. By appropriate control of stepper motor 48 the position of the beam 46 in the X direction may be grossly controlled with respect to a workpiece. The beam 46 is utilized to grossly locate a carriage 60 with respect to the workpiece in the Y direction. The carriage 60 carries the aforementioned end effector 42 which precisely locates a working member 61 with respect to the workpiece in the Z direction. To accomplish translation of the carriage 60 in the Y direction, the beam 46 includes parallel tracks 62 and 64. The carriage 60 traverses the tracks 62 and 64 on roller bearings from one extremity of the beam 46 to the other in the Y direction. The position of the carriage 60 along the tracks 62 and 64 is controlled by means of a stepper motor 68 which is also mounted to the beam 46. The stepper motor 68 drives a belt 70 by means of the spindle 72. The belt 70, in turn, drives a pulley 74 which, in turn, drives a second pulley 76. A belt 78 is attached to the carriage 60 at a first location 80 and also at a second location 82. The belt traverses the pulley 76 at one extremity of the beam 46 and traverses the pulley 84 at the other extremity of the beam 46 remote from the stepper motor 68. Operation of the stepper motor 68, through the operation of belts 70 and 78 thus controls the Y position of the carriage 60 vis-a-vis the workpiece. Once the carriage 60 is grossly positioned with respect to the workpiece, the precise movements performed by the end effector 42 may be accomplished. To achieve these precise movements, a first motive means preferably comprising a rotary stepper motor 86 and a second motive means preferably comprising a rotary stepper motor 88 are provided. Stepper motors 86 and 88 are transported with the carriage 60. The first stepper motor 86 rotates the shaft 90 which is coupled by a first belt 92 to the end effector 42. The second stepper motor 88 drives a shaft 94 which is coupled to a second drive belt 96 to the end effector 42. By appropriate control of the first and second motors 86 and 88 and thus the rotation of belts 92 and 96, the end effector 42 may accomplish rotation, translation, or simultaneous and combined translation and rotation of a working member. As shown in Fig. 2, the working member includes a vacuum pick-up means 210, an alignment tool 240 and an actuator means 290 which will be further described below.

In addition to the components already described, the carriage 60 further includes photodetectors 98 and 100 which are utilized to sense the vertical position of the end effector 42. As shown in Fig. 2, the end effector 42 is shown in its extreme upward position. The carriage 60 further includes a tube 100 which is connected to a suitable vacuum source (not shown). As may best be seen from Fig. 3, the tube 100 is directed to a central location at the top of the end effector 42.

Referring now to Fig. 4, the end effector 42 will be described in detail with the alignment means 240 and actuator 290 removed for the sake of simplicity. As shown in Fig. 4, the end effector 42 includes a stationary portion 102 which comprises an annular housing having a peripheral flange 104. The flange 104 of the housing is rigidly connected to the carriage 60 by means of screws 106. Thus, the stationary portion 102 of the end effector 42 is fixed with respect to the carriage 60. The end effector 42 further includes a shaft 108 movable with respect to the stationary portion 102. The shaft 108 is preferably a hollow shaft with a tube 110 traversing therethrough. The tube terminates in a barb fitting 111 where it couples with tube 100 for connection to a vacuum source. Thus, the shaft 108 may be used to transport components for assembly which remain attached to it by a vacuum.

The shaft 108 includes a threaded portion 112 intermediate the extremities thereof. Mating with the threaded portion 112 is a threaded means 114 which is rotatably mounted to the stationary portion 102 of the end effector for causing axial translation of the shaft 108 upon relative rotation of the threaded means 114 with respect to the threaded portion 112 of the shaft. In accordance with the preferred embodiment of the present invention, the threaded means 114 is rigidly attached to a spindle or sleeve 116 which rotates within the stationary housing 102 on bearings 118. A first timing pulley 120 is also rigidly attached to sleeve 116. The first timing pulley 120 is driven by a belt 92 from the first stepping motor 86. Rotation of the first timing pulley 120 by the motor 86 causes rotation of the sleeve 116 with respect to the stationary portion 102. The threaded means 114 and the sleeve 116 are retained in position with respect to the stationary portion 102 by means of a retaining ring 122 and a locking spring 125.

Further in accordance with the preferred embodiment of the present invention, the end effector 42 also includes a means for controlling rotation of the shaft 108. The means for controlling rotation of the shaft 108 may either cause or preclude shaft rotation while also permitting axial translation of the shaft with respect to the stationary portion 102. This means for controlling the rotation of the shaft preferably comprises a control socket or yoke means 124 which cooperates with a control arm or pin 126. The pin 126 extends radially from the shaft 108 and is fixed to it. In accordance with the embodiment shown in Fig. 4, the pin 126 rides in a slot 128 formed in the yoke means 124. The yoke 124 is axially aligned with the shaft 108 and rotatably mounted with respect to it. The yoke 124 is rigidly attached with respect to a means for causing its rotation. This means comprises a second timing pulley 130. The timing pulley 130 is rigidly attached to the yoke 124 by means of set screws 132. The timing pulley 130 with the yoke 124 attached thereto are mounted for rotation about the shaft 108 by virtue of the fact that the pulley 130 is mounted on bearings 134 situated between it and the sleeve 116.

Rotation of the timing pulley 130 is accomplished by means of the second stepping motor 88 coupled to the timing pulley 130 by means of the drive belt 96. The control arm or pin 126 is rigidly attached to the shaft 108 by means of set screws one of which is shown at 136. Attached to the pin 126 is an annular sensor disk 140. The peripheral surface 142 of the sensor disk 140 is a reflective surface which is viewable by photodetectors 98 and 100 mentioned above so as to detect the vertical position of the shaft 108.

As will be more fully described below, axial translation of the shaft 108 with respect to the stationary portion 102 of the end effector 42 causes the control arm or pin 126 to travel axially through the slot 128. In this manner, the yoke 124 permits axial translation of the shaft 108. Moreover, rotation of the timing pulley 130 about the shaft 108 causes rotation of the yoke 124 which, in turn, causes rotation of the pin 126. Rotation of the pin 126, since it is fixed to the shaft 108 via set screws 136 also causes rotation of the shaft 108.

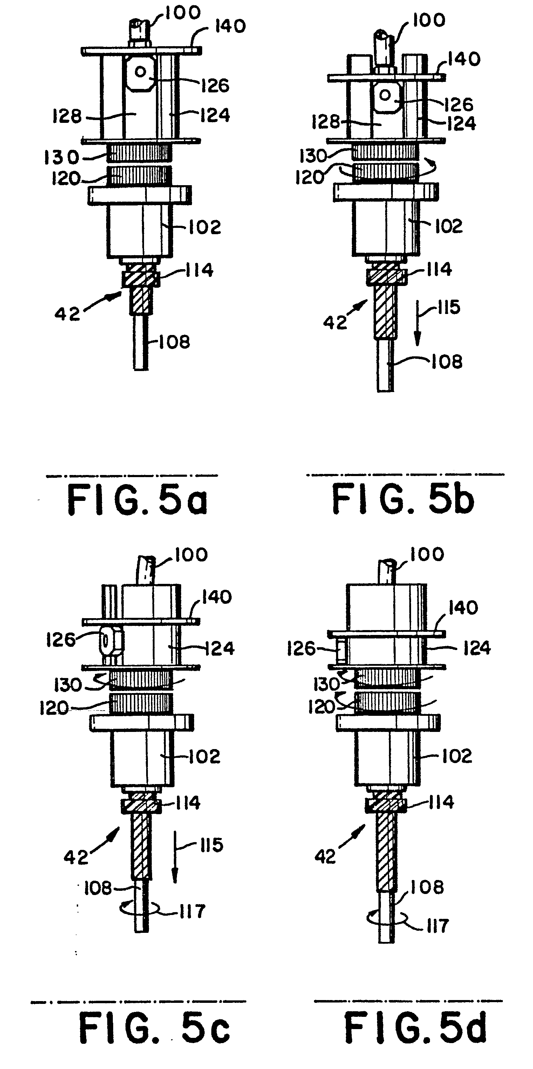

Referring now to Figs. 5A-5C, the operation of the end effector 42 shown in Fig. 4 will be described in detail. In Fig. 5A the end effector 42 is depicted in its uppermost position. In this position, the pin 126 is at the upper extremity of the slot 128. Moreover, the shaft 108 is also at its uppermost position with respect to the workpiece. Both pulleys 120 and 130 are stationary and thus the shaft 108 and the working member 61 which is attached to it are at rest.

In Fig. 5B, the timing pulley 120 is in the process of being rotated in a counter-clockwise direction (as seen from above), the rotation being caused by the stepper motor 86 which drives the timing pulley 120 by means of the drive belt 92. In the mode of operation being depicted in Fig. 5B, the stepping motor 88 is at rest, thereby locking the timing pulley 130 in the position shown. Since the pulley 130 is stationary, the yoke means 124 to which it is rigidly attached is stationary as well. Thus, the cooperation of the slot 128 formed in the yoke means 124 and the pin 126 which is rigidly attached to the shaft 108 precludes rotation of that shaft. At the same time, however, the pin 126 is free to travel axially through the slot 128. Upon rotation of the pulley 120 by means of the stepper motor 86 the threaded means 114 is rotated relative to the shaft 108, which causes the shaft 108 to axially translate in the direction of arrow 115. Thus, in the mode of operation depicted in Fig. 5B, the shaft 108 is axially translated without rotation.

Referring now to Fig. 5C, still another mode of operation of the end effector 42 is depicted. In Fig. 5C, the timing pulley 130 is being rotated in a clockwise direction (as seen from above) through the action of stepping motor 88. At the same time, the timing pulley 120 is fixed with respect to the stationary portion 102 of the carriage 60. Rotation of the timing pulley 130 causes rotation of the yoke means 124 which is rigidly attached to it. Rotation of the yoke means 124 causes rotation of the pin 126 which, in turn, causes rotation of the shaft 108. Since the pulley 120 is stationary in Fig. 5C, the threaded means 114 is stationary as well. Thus, rotation of the shaft 108 causes the shaft to axially translate in the direction of arrow 115 while simultaneously rotating in the direction of arrow 117.

Referring now to Fig. 5D, the final mode of operation of the end effector 42 will be described. In Fig. 5D both timing pulleys 120 and 130 are being simultaneously rotated in the same direction by means of the simultaneous action of stepping motors 86 and 88. While in Fig. 5D, both timing pulleys 120 and 130 are rotating in a clockwise direction (as seen from above) they may also be rotated in a counter-clockwise direction as desired. Rotation of the timing pulley 130 causes rotation of the shaft 108, while rotation of the pulley 120 causes rotation of the threaded means 114. If, however, the rotation of pulleys 120 and 130 is synchronized, there is no

relative motion between the threaded means 114 and the shaft 108. In this circumstance, the shaft 108 does not axially translate but does rotate in the direction of arrow 117.

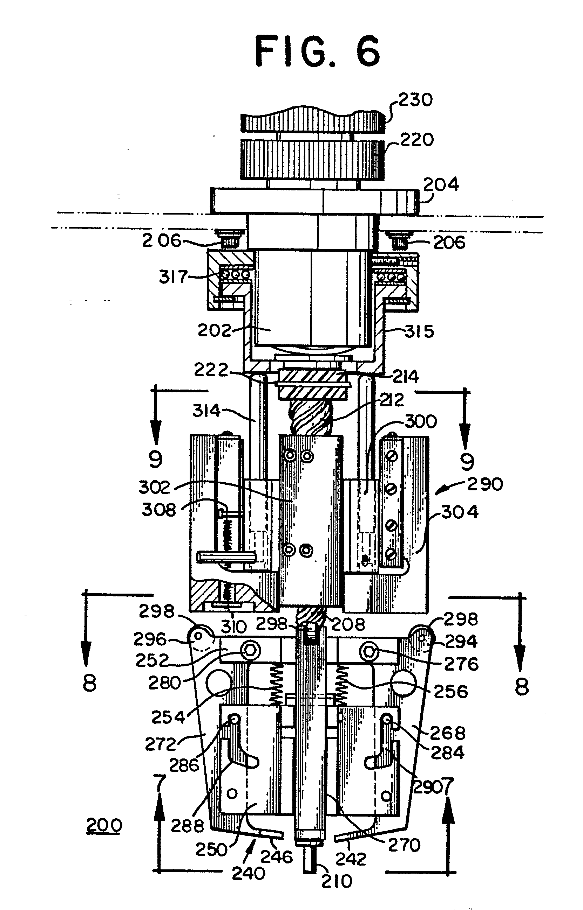

Referring now to Figs. 6-10, an improved end effector having a detachable alignment or centering tool will be described in detail. The end effector described in connection with Figs. 6-10 is similar to that described in connection with Figs. 4-5, except that it further includes an alignment means which permits not only the gripping of parts for assembly with respect to a workpiece, but which also aligns that work in a precise position. The end effector 200 of Fig. 6 includes a stationary portion 202. The stationary portion 202 of the end effector 200 includes a peripheral flange 204 which is fixed to the carriage 60 by means of screws 206. The end effector 200 further includes a component pick-up means comprised of a hollow shaft 208. The shaft 208 is movable along its axis with respect to the stationary portion 202 of the end effector 200. As with the embodiment described above, the shaft 208 is hollow and one end is coupled to a vacuum source, while the opposite end terminates in a nozzle 210 for holding work adjacent thereto by means of the vacuum.

Also like the embodiment described above, the shaft 208 includes a threaded portion 212 which engages a threaded means 214. The threaded means 214 is rigidly attached to a spindle or sleeve (not shown) which rotates within the stationary housing 202. The threaded means 214 and sleeve are retained in position with respect to the stationary housing 202 by means of a retaining ring 222. A first timing pulley 220 is provided which is driven by a motor which causes rotation of the sleeve with respect to the stationary portion 202. A second timing pulley 230 is also provided as in the embodiment described above. Selective rotation of the timing pulleys 220 and 230 permits rotation of the shaft 208, axial translation of that shaft or simultaneous rotation and axial translation as desired.

In accordance with the most important aspect of the embodiment of Fig. 6, the end effector 200 further includes an alignment means shown generally at 240 which is detachably coupled to the pick-up means, i.e., shaft 208. The alignment means 240 is provided for precisely aligning work with respect to the nozzle 210 of the pick-up means.

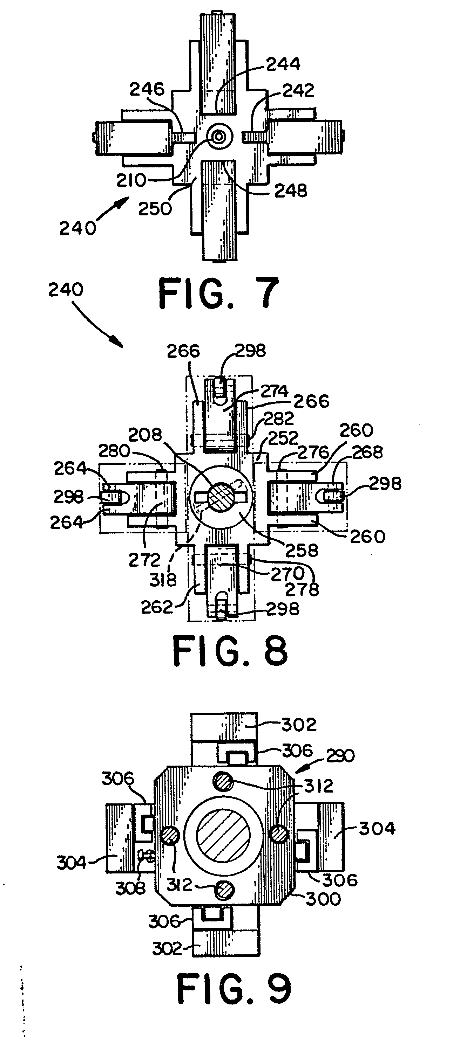

As shown in Fig. 6 and Fig. 7, the alignment means 240 includes a first pair 242 and 246 and a second pair 244 and 248 of opposing centering fingers. The nozzle 210 of the pick-up means normally extends beyond the centering fingers 242, 244, 246 and 248 in a direction away from the carriage 60. The alignment means 240 also includes a collapsible means comprised of a centering block 250 and a knuckle 252 which are interconnected by means of a biasing means comprised of springs 254 and 256. The centering block 250 is fixed to the shaft 208 and rides with the shaft as it moves axially toward and away from the carriage 60. The knuckle 252, on the other hand, is not rigidly attached to the shaft 208, the shaft instead passing through a central aperture 258 of the knuckle 252 (Fig. 8).

As may best be seen in Fig. 8, the knuckle 252 includes four pair of outwardly extending supports 260, 262, 264 and 266. Four downwardly extending arms 268, 270, 272 and 274 are pivotably mounted with respect to the supports 260-266 by means of pins 276, 278, 280 and 282. The aforementioned centering fingers 242, 244, 246 and 248 are situated at the extremity of each of the arms 268, 270, 272 and 274, respectively. Rotation of the arms 268-274 about the pins 276-282 causes generally transverse motion of the fingers 242-248 with respect to the axis of the pick-up means or shaft 208. Moreover, the shaft 208 and the nozzle 210 are movable with respect to the fingers 242-248. Upon retraction of the shaft 208 toward the carriage 60, the nozzle 210 moves axially relative to the fingers 242-248 because such retraction causes collapse of the centering block 250 with respect to the knuckle 252 against the urging of the biasing or spring means 254 and 256. In order to permit the collapse of the centering block 250 with respect to the knuckle 252, each of the arms 268-274 are provided with a pin or slide as shown at 284 and 286 (Fig. 6). The slide mates with a track 288 and 290 formed in the centering block 250. The configuration of the tracks 288 and 290 are designed so as to preclude rotation of the arms 268-274 and therefore to preclude transverse motion of the fingers 242-246 until the nozzle 210 is in a predetermined position along its axis with respect to those centering fingers.

As may best be seen from Figs. 6 and 9, relative axial movement between the nozzle 210 and the fingers 242-246, as well as transverse movement of those fingers caused by rotation of the arms 268-274 is achieved by means of an actuator means shown generally at 290. The actuator means 290 is coupled between the alignment means 240 and the stationary portion 202 of the end effector 200. The actuator means 290 includes a lowermost surface which abuts and bears upon the arms 268-274. In accordance with the preferred embodiment of the present invention, each of the arms 268-274 is provided with a shoulder portion such as is shown at 294 and 296 which supports four roller bearings 298. The lowermost surface of the actuator 290 abuts against the roller bearings 298 upon axial retraction of the shaft 208. The actuator thus causes collapse of the knuckle 252 with respect to the centering block 250 and thereafter causes rotation of the arms 268-274 about the pins 276-282 and, in turn, a transverse movement of the fingers 242-248.

In accordance with the preferred embodiment of the present invention, the actuator 290 includes an actuator housing 300 which is fixed to the shaft 208 and which travels in an axial direction along with the shaft. The actuator 290 further includes a first actuator block 302 and a second actuator block 304. The actuator blocks 302 and 304 are slidably mounted with respect to the actuator housing 300 by means of slide bearings 306. Moreover, the first and second actuator blocks 302 and 304 are slidable and are independently movable with respect to each other. As shown in Fig. 6, a pin 308 is provided which is coupled to the actuator housing 300. Another pin 310 is provided which is coupled to the first actuator block 304. A spring attached to the pins 308 and 310 normally urges the first and second actuator means 302 and 304 in an upward direction to abut the actuator housing 300. The actuator means 300 also includes a plurality of wells 312 which extend in a longitudinal direction. Situated within each of the wells 312 are plunger means 314 which abut at their lowermost extremities against the first and second actuator blocks 302 and 304. The plunger means 314 abut against a rotating collar 315 at their upper extremities. The collar 315 rotates about the stationary portion 202 on bearings 317. As the shaft 208 is retracted toward the carriage means 60 the actuator housing 300 also tends to move toward the carriage 60. The plunger means 314, however, causes the first and second actuator blocks 302 and 304 to remain stationary, thereby causing the lowermost surface of the first and second actuator blocks 302 and 304 to abut against the roller bearings 298 which, in turn, causes the relative movement between the nozzle 210 and the fingers 242-248.

In operation, the end effector 200 of Fig. 6 is particularly suitable for gripping electronic components by means of a vacuum force exerted through the nozzle 210. The components are presented to the nozzle 210 in a randomly aligned fashion. Selective rotation of the timing pulleys 220 and 230 causes axial retraction of the shaft 208 along its axis toward the carriage 60. Retraction of the shaft 208 along its axis causes the centering block 250 as well as the actuator housing 300 to travel in a direction toward the stationary portion 202 of the end effector and therefore in the direction of the carriage 60. The first and second actuator means 302 and 304 remain stationary and exert a downward force on the knuckle 252 through the roller bearings 298 as described above. This downward force causes collapse of the knuckle 252 with respect to the centering block 250, thereby causing a relative change in the position of the nozzle 210 with respect to the centering fingers 242-248. When the chip is at the same elevation as the fingers, the slides 284 and 286 are caused to travel radially inwardly along the track 288 and 290 thereby causing the centering fingers 242-248 to abut the respective sides of the electronic component and to align and center that component with respect to the center of the nozzle 210. Because the actuator blocks 302 and 304 are independently movable, the length of the transverse path of travel of the first pair of centering fingers 242 and 246 may differ from the length of the transverse path of travel of the second pair of centering fingers 244 and 248. Accordingly, the alignment means 240 of the present invention may center or align, not only square, but also rectangular and other irregularly shaped parts.

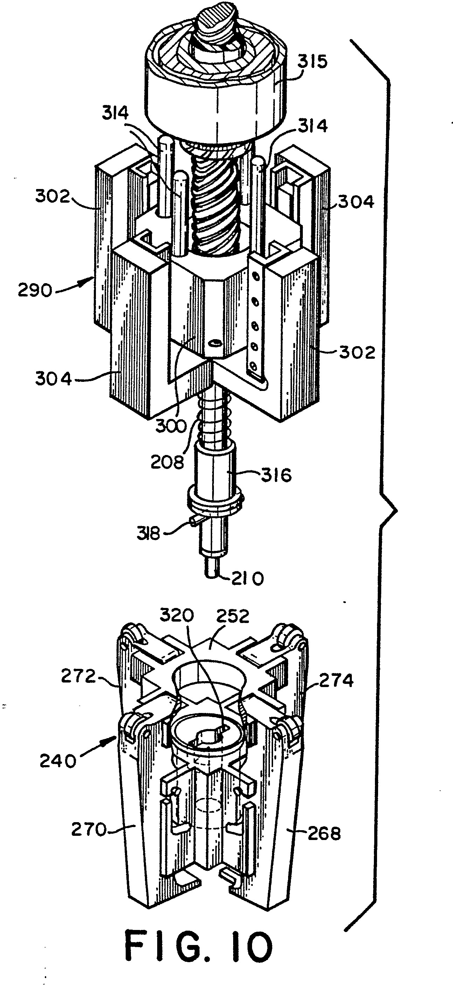

Referring now to Fig. 10, an important aspect of the present invention residing in the manner in which the alignment means 240 is attached to the pick-up means will be described. As shown in Fig. 10, the pick-up means or shaft 208 preferably includes a sleeve 316 having a radially projecting key 318 therefrom. The alignment means 240, and more particularly, the centering block 250 includes a key way 320 which mates with the radially projecting key 318 from the sleeve 316 of the pick-up means. Thus, the shaft 208 may be inserted within the central aperture of the centering block 250 and after insertion, the shaft 208 and the radially projecting key 318 may be rotated in one direction with respect to the centering block to fasten and lock the alignment means 240 with respect to the shaft 208. The key 318 is shown in phantom in Fig. 7 in the locked position. As will be appreciated, rotation of the shaft 208 in an opposite direction will unlock and, therefore, uncouple the alignment means 240 from the end effector.

In accordance with an important aspect of the robotic system of the present invention, a single end effector may be provided with a plurality of alignment means such as the one shown in Figs. 6-10 with each alignment means having somewhat differently sized centering fingers. Each of the alignment means may be positioned in a predetermined location in a holder or carrier as desired. The robotic system may be programmed to grossly position the end effector 200 with respect to a first alignment means and to couple or attach the pick-up means to the first such alignment means. Thereafter, components having a particular range of sizes or shapes may be assembled with respect to a substrate. After all such components have been assembled with respect to that particular substrate, the robotic system is programmed such that the end effector returns to a predetermined location at which the first alignment means is decoupled from the shaft 208. Thereafter, a second alignment means having differently sized centering fingers from the first alignment means may be coupled to the shaft 208. Thereafter, this second alignment means may be utilized to assemble components in a second range of sizes or shapes. This process may be repeated for additional alignment means thus providing the robotic system of the present invention with a wider range of capabilities than are present with known prior art devices.

While the particular embodiments of the end effector of the present invention and the robotic system with which it is used have been shown and described, it will, of course, be understood that various modifications may be made without departing from the principles of the invention. The appended claims are, therefore, intended to cover any such modifications within the true spirit and scope of the invention.

What is claimed is:

1. In a robotics system having a carriage for grossly positioning work with respect to a workpiece and an end effector for precisely positioning said work with respect to that workpiece, said end effector comprising:

a stationary portion fixed to the carriage;

a pick-up means movable along its axis with respect to said stationary portion, said pick-up means having a nozzle for holding work adjacent thereto by means of a vacuum; and

alignment means detachably coupled to said pick-up means for precisely aligning said work with respect to said nozzle.

2. The end effector of claim 1 wherein said alignment means further comprises:

at least one pair of opposing centering fingers, said nozzle normally extending beyond said fingers;

collapsible means permitting retraction of said pick-up means along its axis toward said stationary portion; and

means for causing transverse movement of said fingers when said nozzle is in a predetermined position with respect to said fingers.

3.    The end effector of claim 2 wherein said collapsible means comprises:

a first portion coupled to said pick-up means;

a second portion slidably mounted with respect to said first portion, said second portion being collapsible with respect to said first portion along the axis of said pick-up means upon retraction of said nozzle toward said carriage; and

a first biasing means normally urging said first and said second portions apart.

4.    The end effector of claim 3 further comprising a first and a second pair of opposing centering fingers and wherein said means for causing transverse movement of said fingers comprises:

a first and a second pair of arms, one for each of said pairs of said centering fingers, each of said fingers being located at the extremity of one such arm, said arms being pivotably mounted with respect to said collapsible means such that rotation of said arms causes generally transverse motion of said fingers.

5.    The end effector of claim 4 wherein each of said arms includes a slide and wherein said second portion of said collapsible means includes a plurality of tracks each mating with one such slide, said slides and tracks precluding rotation of said arms and transverse motion of said fingers until the nozzle is in a predetermined position with respect to said fingers.

6. The end effector of claim 4 further comprising:

an actuator means coupled between said alignment means and said stationary portion for causing rotation of said first and said second pairs of arms upon retraction of said nozzle with respect to said fingers.

7. The end effector of claim 5 wherein said actuator means further comprises:

a first actuator block for causing rotation of said first pair of arms and, in turn, the transverse movement of said first pair of fingers; and

a second actuator block, movable independently of said first activator block for causing rotation of said second pair of arms and, in turn, the transverse movement of said second pair of fingers.

8. The end effector of claim 7 further comprising:

an actuator housing coupled to said pick-up means, said first and said second actuator blocks being slidably mounted with respect thereto.

9. The end effector of claim 8 wherein each of said arms includes a roller bearing and wherein said first actuator block abuts the roller bearings of said first pair of arms and wherein said second actuator block abuts the roller bearings of said second pair of arms.

10. The end effector of claim 1 wherein said pick-up means includes a key and wherein said alignment means includes a key way mating therewith such that said pick-up means and said alignment means are detachably coupled whenever said key and key way are mated and locked.

11. The end effector of claim 2 wherein said pick-up means includes a key and wherein said first portion of said alignment means includes a key way mating therewith, said first portion of said alignment means being detachably coupled to said pick-up means whenever said key and said key ways are mated and locked.

12. An end effector for a robotics system comprising:

a stationary portion;

a hollow shaft capable of both axial translation and axial rotation with respect thereto, said shaft having

one end coupled to a vacuum source; and

an opposite end terminating in a nozzle for holding work adjacent thereto by means of said vacuum; and

alignment means detachably coupled to said shaft for aligning said held work with respect to said nozzle.

13. The end effector of claim 12 wherein said means for aligning comprises:

a plurality of centering fingers;

means permitting axial translation of said shaft with respect to said centering fingers; and

means permitting transverse movement of said fingers with respect to said nozzle.

14. The end effector of claim 13 wherein said means permitting axial translation comprises:

a first portion coupled to said shaft;

a second portion slidably mounted with respect to said first portion and coupled to said fingers, said second portion being axially collapsible with respect to said first portion upon retraction of said shaft toward said stationary portion; and

first biasing means normally urging said first and said second portions apart thereby retarding said axial collapse.

15. The end effector of claim 14 wherein said means permitting transverse movement of said fingers comprises:

a plurality of arms, one for each of said centering fingers, each of said arms being pivotably mounted with respect to said second portion.

16. The end effector of claim 15 further comprising:

actuator means mounted to said shaft and coupled between said aligning means and said stationary portion for causing axial collapse of said first portion with respect to said second portion of said aligning means upon retraction of said shaft toward said stationary portion; and for causing transverse movement of said centering fingers whenever said shaft is in a predetermined position with respect to said stationary portion.

17. The end effector of claim 16 wherein said plurality of fingers comprises:

a first pair of opposing fingers; and

a second pair of opposing fingers, and wherein said actuator means further comprises:

a first actuator block for causing transverse movement of said first pair of opposing fingers; and

a second actuator block movable independently of said first actuator block for causing transverse movement of said second pair of opposing fingers.

- 32 -

0162980

18. A robotics system for assembling a plurality of circuit components of varying size and shape with respect to a substrate comprising:

a carriage for grossly positioning said components with respect to said substrate;

an end effector mounted on said carriage for precisely positioning said components with respect to said substrate, said end effector including:

a stationary portion fixed to said carriage; and

a pick-up means movable along its axis with respect to said stationary portion, said pick-up means having a nozzle for holding circuit components adjacent thereto by means of a vacuum;

a first alignment means detachably mounted to said pick-up means, said first alignment means having pairs of opposing centering fingers for aligning circuit components with respect to said nozzle, said components being within a first range of sizes; and

a second alignment means detachably mounted to said pick-up means alternatively to said first alignment means, said second alignment means having pairs of opposing centering fingers for aligning circuit components with respect to said nozzle, said components being in a second range of sizes differing from said first range of sizes.

0162980

FIG. I

PRIOR ART

FIG. 3

# FIG. 2

## FIG. 4

0162980

FIG. 5a

FIG. 5b

FIG. 5c

FIG. 5d

# FIG. 6

200

FIG. 7

FIG. 8

FIG. 9

0162980

FIG. 10

## DOCUMENTS CONSIDERED TO BE RELEVANT

EP 84306058.3

| Category | Citation of document with indication, where appropriate, of relevant passages | Relevant to claim | CLASSIFICATION OF THE APPLICATION (Int Cl.4) |
|---|---|---|---|
| | DE - A1 - 2 944 810 (TOKYO SHI-BAURA DENKI) | | B 25 J 15/00 |
| Y | * Fig. 5A-C; claims; pages 10-12 * | 1,2 | |
| A | * Fig. 1-6; claims; pages 10-12 * | 3-8, 12-17 | |
| | -- | | |
| | DD - A - 207 878 (KONRAD) | | |
| Y | * Fig. 1,2; page 4; claims * | 1,2 | |
| A | * Fig. 1-5; page 4; claims * | 3,4,6 | |
| | -- | | |
| | FR - A1 - 2 516 432 (MONGODIN ET PHYSIMECA) | | |
| A | * Fig. 1-4; claims * | 1-4, 12,13 | |
| | -- | | TECHNICAL FIELDS SEARCHED (Int Cl 4) |
| | US - A - 4 395 069 (LEBRET) | | |
| A | * Fig. 1-4; abstract * | 1,2 | B 25 J 15/00 |
| | ---- | | B 25 J 5/00 |
| | | | B 25 J 11/00 |
| | | | H 01 L 21/00 |

The present search report has been drawn up for all claims

| Place of search | Date of completion of the search | Examiner |
|---|---|---|
| VIENNA | 08-08-1985 | KRAL |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82